# DEMANDE DE BREVET EUROPEEN

(11) **EP 3 141 373 A1**
(43) Date de publication de la demande: **15.03.2017**
(21) Numéro de dépôt: 16187674.3
(22) Date de dépôt: 07.09.2016
(51) Int. Cl.: B29C 51/16, B29C 51/12, B29C 51/14, B29C 51/10, B65D 5/56, B29K 711/12, B29K 67/00, B29K 23/00, B29C 65/00, B29C 65/02

(54) **PROCÉDÉ ET MACHINE POUR LA FABRICATION DE BARQUETTES COMPOSITES THERMOSOUDÉES ET BARQUETTE**

(30) Priorité: 07.09.2015 FR 1558282
(71) Demandeur: C.G.L. Pack Service, 74370 Epagny Metz-Tessy (FR)
(72) Inventeur: RIVAL, Jean-Luc, 74940 Annecy le Vieux (FR)
(74) Mandataire: Cabinet Poncet

(57) **Abrégé**

Procédé, machine de fabrication de barquettes composites thermosoudées et barquette. La barquette est constituée d'un conteneurs (2) creux en carton plastifié dans lequel est thermoformé et soudé un film (3) de polyéthylène ou de polyéthylène téréphtalate. La face plastifiée du conteneur en carton (2) est préchauffée avant le thermoformage,
le film (3) est chauffé avec des moyens de rayonnement (36) et pressé avec des moyens pour presser sélectivement le film (3) dans le creux du conteneur en carton (2) plastifié préalablement préchauffé alors que le conteneur (2) préchauffé est encore chaud.

## Description

La présente invention concerne la production des barquettes composites thermosoudées pour contenir des articles tels que des aliments.

Selon un premier type connu, les barquettes pour contenir des aliments comprennent un conteneur creux délimitant au moins une cavité entre une paroi de fond de conteneur et une paroi périphérique latérale de conteneur, avec une face d'ouverture principale définissant un plan d'ouverture de la cavité vers le haut, et avec un trottoir périphérique supérieur s'étendant radialement vers l'extérieur depuis le haut de la paroi périphérique latérale de conteneur.

Ces barquettes connues sont généralement en matière plastique à paroi relativement épaisse, c'est-à-dire à paroi de fond de conteneur et à paroi périphérique latérale relativement épaisses formées à partir d'une feuille en matière plastique mise en forme, par exemple par moulage et étirement.

L'épaisseur relativement importante de la feuille en matière plastique destinée à former les parois de conteneur après mise en forme, généralement de l'ordre de 0,4 à 0,8 mm avant mise en forme, le plus souvent de 0,6 mm environ avant mise en forme, est nécessaire pour assurer une rigidité suffisante du conteneur afin qu'il puisse être aisément manipulé et qu'il ne soit pas déformé excessivement par les aliments qu'il contient.

Un inconvénient majeur de ces barquettes connues est alors la quantité importante de matière plastique qui constitue les conteneurs, matière qui consomme pour sa production une énergie non renouvelable, et qui devient après usage un déchet plus ou moins difficile à recycler.

Selon un deuxième type connu, décrit par exemple dans les documents FR 2 826 938 et FR 2 933 329, des barquettes pour contenir les aliments comprennent un conteneur creux généralement en matière plastique, et une structure extérieure de renforcement en carton. Ces deux éléments constitutifs de la barquette pour contenir les aliments sont rendus solidaires par usage de colle, c'est-à-dire par un moyen de solidarisation supplémentaire rapporté, de nature chimique. Ces barquettes composites présentent l'avantage d'utiliser une quantité moindre de matière plastique, car la structure de renforcement en carton améliore la tenue mécanique globale de la barquette en compensant le manque de rigidité du conteneur. Ainsi, la paroi du conteneur creux peut être plus mince.

Cependant, ce second type de barquette présente un premier inconvénient qui est de nécessiter l'ajout d'un élément supplémentaire rapporté, à savoir la colle, présente en quantité importante pour assurer une adhésion suffisante entre deux éléments constitutifs en matériaux différents et relativement épais l'un et l'autre. En outre, une quantité supplémentaire de colle est encore nécessaire pour assurer la mise et le maintien en forme de la structure de renforcement en carton avant l'assemblage, par collage de languettes d'assemblage.

De plus, un recyclage sélectif de telles barquettes composites ne peut pas être aisément mis en oeuvre, car il est difficile de séparer le conteneur creux de la structure extérieure de renforcement en carton et d'éviter simultanément que la colle reste solidaire de l'un ou l'autre élément constitutif.

Le document FR 2 975 973 décrit une barquette composite en carton dont la face intérieure est rendue étanche par un film d'étanchéité en matière plastique thermoformé, la surface de contact du film d'étanchéité avec le carton étant autocollante ou thermocollante. Cependant, soit le film d'étanchéité est complexe pour présenter une surface de contact suffisamment collante, soit l'adhésion du film d'étanchéité est insuffisante. Et il reste nécessaire d'utiliser de la colle pour la mise et le maintien en forme de la structure extérieure de renforcement avant l'assemblage.

Le document FR 2 483 307 A1 divulgue un procédé de fabrication de récipients de type pots de yaourt par emboutissage profond. Le procédé consiste à prévoir un récipient à base de papier ou de carton, à le placer dans un moule à emboutissage profond avec un film plastique d'étanchéité et d'assemblage ayant une épaisseur comprise entre 0,2 et 0,6 mm qui le surplombe, et à lier le film plastique d'étanchéité et d'assemblage au récipient en papier ou carton par la déformation du film plastique sous pression et à chaud pendant l'emboutissage profond. Les exemples de matériaux divulgués pour le film plastique d'étanchéité et d'assemblage sont le polystyrène, le PVC, le polypropylène. Dans ce procédé, en principe, il n'y a pas d'apport de matière entre le film plastique d'étanchéité et d'assemblage et le récipient en papier ou carton. Toutefois, le document enseigne d'améliorer l'assemblage en appliquant, en certains endroits, un adhésif à chaud, une laque collant à chaud, ou un revêtement en colle à chaud.

Le document WO 2009/138786 A2 propose un procédé de réalisation de barquette composite étanche dans lequel un film d'étanchéité en matière plastique est chauffé puis déformé et pressé pour adhérer à la surface intérieure d'une barquette en carton. Il est recommandé une ou plusieurs étapes ultérieures supplémentaires d'échauffement et de pressage du film d'étanchéité contre la barquette en carton pour assurer un collage suffisant du film d'étanchéité sur la barquette en carton. Cependant, ces étapes supplémentaires sont nécessaires, augmentent le coût de production, et ne procurent encore pas une adhérence fiable, notamment lorsque le film d'étanchéité est en polyéthylène. Et il reste nécessaire d'utiliser de la colle pour la mise et le maintien en forme de la structure extérieure de renforcement avant l'assemblage.

Les difficultés d'adhérence sont moins fréquentes lorsque le film d'étanchéité est en polypropylène, car cette matière adhère facilement au carton. Toutefois, un premier inconvénient est alors que le film de polypropylène déforme le carton lors du refroidissement après thermoformage, ce qui confère à la barquette un aspect esthétique inacceptable.

Un second inconvénient est une difficulté de séparer ultérieurement le carton, dont certaines parties restent collées au film d'étanchéité lors du recyclage.

Les difficultés pour réaliser une adhérence réversible sont très importantes lorsque le film de matière plastique est en polyéthylène ou en polyéthylène téréphtalate, ce qui est particulièrement regrettable car ces matériaux sont moins onéreux et bien adaptés à une industrialisation dans le domaine alimentaire.

Les difficultés pour réaliser une adhérence réversible sont encore plus importantes lorsque le film d'étanchéité est de faible épaisseur, alors qu'il est a priori souhaitable de réduire la quantité de matière plastique.

Un problème proposé par la présente invention est de concevoir des moyens pour réaliser des barquettes composites à base de carton et film plastique d'étanchéité dans lesquelles l'adhérence du film plastique d'étanchéité sur le carton est assurée de manière fiable sans l'utilisation de couche importante de colle, et dans lesquelles l'adhérence du film plastique d'étanchéité sur le carton soit réversible de façon que la séparation du film plastique d'étanchéité et du carton puisse être assurée aisément lors d'une opération ultérieure de recyclage après utilisation, en évitant toute adhérence du carton sur le film plastique d'étanchéité.

Un second problème proposé par la présente invention est de concevoir de tels moyens permettant d'assurer l'adhérence fiable et réversible d'un film plastique d'étanchéité sur le carton de la barquette lorsque le film est en polyéthylène ou en polyéthylène téréphtalate.

Un troisième problème proposé par la présente invention est de concevoir de tels moyens permettant d'assurer l'adhérence fiable et réversible du film plastique d'étanchéité en polyéthylène ou en polyéthylène téréphtalate sur le carton de la barquette même dans le cas où le film plastique d'étanchéité est de faible épaisseur.

L'invention vise le cas échéant à supprimer la nécessité de colle et de languettes d'assemblage pour la mise et le maintien en forme de la structure en carton.

Pour atteindre ces buts ainsi que d'autres, selon un premier aspect, l'invention propose un procédé de fabrication d'une barquette destinée à contenir des aliments, comportant les étapes suivantes :
A) fournir un conteneur creux en carton, délimitant au moins une cavité entre une paroi de fond de conteneur et une paroi périphérique latérale de conteneur, avec une ouverture principale selon un plan d'ouverture de la cavité vers le haut,
C) fournir un film d'étanchéité en matière plastique au regard de l'ouverture principale du conteneur en carton,
E) déformer ledit film d'étanchéité en le plaquant à chaud et sous pression contre la face intérieure du conteneur en carton.

### Selon l'invention :

- pendant l'étape A), on utilise un carton à face plastifiée,
- pendant l'étape A), la face plastifiée du carton est orientée vers l'intérieur du conteneur,
- avant l'étape E), on prévoit une étape : B) préchauffer la face plastifiée du carton jusqu'à une température de préchauffage,
- pendant l'étape E), ledit film d'étanchéité et à une température permettant sa déformation plastique, et la face intérieure du conteneur en carton est encore chaude.

Dans la présente description et dans les revendications qui suivent, on entend par « carton à face plastifiée » un carton dont une face a été plastifiée par pelliplaquage, c'est-à-dire par contrecollage d'un film plastique mince. Il convient de ne pas confondre un tel carton à face plastifiée avec un carton dont une face a été enduite d'une matière plastique à l'état liquide ou pâteux, car les propriétés sont très différentes, comme cela sera démontré par les essais relatés dans la présente description.

Grâce à un tel procédé, l'adhérence du film d'étanchéité sur le carton est satisfaisante, évitant la séparation intempestive du film d'étanchéité vis-à-vis du carton, tout en autorisant une séparation ultérieure du film d'étanchéité à l'écart du carton lors d'une opération de recyclage.

Les techniques jusqu'à présent connues consistaient à chauffer une ou plusieurs fois la matière plastique constituant le film d'étanchéité pour tenter d'assurer une adhérence suffisante du film d'étanchéité sur une structure de renfort en carton, espérant provoquer de façon logique un meilleur ramollissement et une meilleure pénétration de la matière plastique dans des irrégularités de surface du carton. Mais en réalité ces techniques connues ne procuraient pas des résultats satisfaisants. La présente invention prend le contre-pied et propose d'utiliser un carton à surface plastifiée et de préchauffer le carton lui-même. De façon étonnante, il a été constaté que cela améliore très sensiblement l'adhérence du film d'étanchéité sur le carton, et rend cette adhérence particulièrement fiable et réversible. Il n'est alors plus nécessaire ni utile de procéder à de multiples échauffements ultérieurs de la structure assemblée de film d'étanchéité et de carton.

Il semble que le préchauffage du carton permet de constituer, dans la masse du carton, une réserve de calories qui maintient pendant un temps suffisant le film d'étanchéité à une température appropriée pour son adhésion. Simultanément, la présence d'une couche appropriée de matière plastique sur la face plastifiée du carton facilite la soudure avec le film d'étanchéité, ladite couche de matière plastique étant elle-même portée à la température appropriée pour l'adhésion du film d'étanchéité.

En complément, avant l'étape E), on peut avantageusement prévoir une étape D) au cours de laquelle on chauffe le film d'étanchéité à une température permettant sa déformation plastique.

Pour constituer une réserve de calories suffisante, il est avantageux d'effectuer un préchauffage tel que, à l'issue de l'étape B), la face plastifiée du conteneur en carton est à une température de préchauffage T1 d'environ 100°C.

De la sorte, malgré la baisse inévitable de température de la face plastifiée du conteneur en carton après l'étape B), cette température peut rester suffisante pour assurer l'adhésion correcte lors de l'étape ultérieure de déformation et de placage du film d'étanchéité contre le carton.

En pratique, en évitant des temps de transfert trop longs, on fait en sorte que, au début de l'étape E), la face plastifiée du conteneur en carton est encore à une température d'adhésion T2 supérieure à 50°C, avantageusement comprise entre 60°C et 80°C.

De la sorte, la température est suffisante pour assurer l'adhésion correcte lors de l'étape de déformation et de placage du film d'étanchéité contre le carton.

En pratique, on peut avantageusement prévoir que, avant l'étape E), le conteneur en carton est engagé dans un moule de thermoformage, et que, lors de l'étape E), on aide la pénétration du film d'étanchéité dans ladite au moins une cavité du conteneur en carton à l'aide de moyens de poussée.

Les moyens de poussée peuvent comprendre des moyens d'injection de gaz sous pression sur la face extérieure du film d'étanchéité, et/ou des moyens d'aspiration de gaz dans l'interface entre le moule de thermoformage et le conteneur en carton.

De préférence les moyens de poussée produisent une surpression d'air de 400 000 à 600 000 Pa sur la face extérieure du film d'étanchéité, et une dépression d'air de 50 000 à 80 000 Pa dans l'interface entre le conteneur en carton et le film d'étanchéité.

Selon un mode de réalisation avantageux, l'étape A) comprend les séquences :
A1) fournir une plaque de carton découpée, rainée, et à face plastifiée,
A2) avant ou après l'étape B) de préchauffage de la face plastifiée du carton, préformer la plaque de carton par pliage pour constituer ledit conteneur creux en carton délimitant au moins une cavité entre une paroi de fond de conteneur et une paroi périphérique latérale de conteneur, avec une ouverture principale selon un plan d'ouverture de la cavité vers le haut, la face plastifiée du carton étant orientée vers l'intérieur du conteneur.

L'empilage de plaques planes en carton, pour leur stockage et leur désempilage lors de la mise en oeuvre du procédé selon l'invention, est plus simple qu'un empilage ou désempilage de formes creuses. Cela permet de fiabiliser et d'accélérer le procédé de fabrication des barquettes.

De préférence, pendant les étapes A) à D) du procédé, on s'abstient d'utiliser des moyens supplémentaires tels que des collages pour assurer la mise et le maintien en forme du conteneur en carton. Ce maintien en forme se trouve assuré par le seul film d'étanchéité après l'étape E).

Selon l'invention, la face plastifiée du carton peut être en polyéthylène mono (PE), ou de préférence en polyéthylène téréphtalate (PET).

Des cartons plastifiés de la sorte, par un film mince contrecollé, sont aisément disponibles dans le commerce, et conviennent particulièrement bien dans la mise en oeuvre du procédé selon la présente invention.

De préférence, l'épaisseur de la couche de matière plastique formant la face plastifiée du carton est inférieure à 30 microns.

De la sorte, après utilisation de la barquette, la structure de carton plastifiée est en elle-même considérée comme du carton, pour le recyclage, car la quantité de matière plastique est négligeable en comparaison de la quantité de carton.

Selon l'invention, le film d'étanchéité peut être un film multicouche avec une couche en polyéthylène (PE), ou un film en polyéthylène téréphtalate (PET).

En effet, grâce au procédé de préchauffage et à l'utilisation d'un carton plastifié, l'adhésion du film d'étanchéité sur le carton est assurée même dans le cas difficile d'un film d'étanchéité en polyéthylène ou en polyéthylène téréphtalate, matières plastiques qui présentent naturellement une faible capacité d'adhérence sur le carton.

On pourra avantageusement prévoir que la face plastifiée du carton est en même matière que le film d'étanchéité.

En effet, cela facilite l'adhésion et la soudure, et cela réduit le nombre de matières plastiques différentes qu'il faut ensuite recycler après utilisation de la barquette.

Selon un autre aspect, la présente invention propose une machine de fabrication d'une barquette, qui met en oeuvre un procédé de fabrication tel que défini ci-dessus, et qui comprend :
- des moyens de convoyage pour amener un à un des conteneurs creux en carton à un poste de thermoformage,
- des moyens de préchauffage, pour préchauffer au moins une face de conteneur avant le thermoformage, dans un poste de préchauffage,
- un poste de thermoformage, avec des moyens pour amener dans un moule de thermoformage un conteneur provenant des moyens de convoyage, avec des moyens pour amener un film d'étanchéité en matière plastique face à l'ouverture du moule de thermoformage, des moyens pour chauffer le film d'étanchéité, et des moyens pour presser sélectivement le film d'étanchéité dans le creux du conteneur en carton préalablement préchauffé alors que le conteneur préchauffé est encore chaud.

De préférence, cette machine peut comprend en outre :
- des moyens de stockage d'une pile de plaques de carton prédécoupées et rainées selon des lignes de pliure souhaitées,
- des moyens de préformage pour préformer les plaques de carton et constituer ainsi les conteneurs creux en carton.

Pour mieux garantir la mise en oeuvre correcte du procédé selon l'invention, les moyens de préchauffage peuvent être aptes à préchauffer une face du carton à une température de préchauffage T1 d'environ 100°C.

La présente invention permet d'utiliser, comme film d'étanchéité, un film en une matière plastique standard, non complexe, qui n'a pas de propriétés particulières d'adhérence sur le carton. Un tel film d'étanchéité est moins onéreux, et le procédé est aisément industrialisable.

Selon un autre aspect, l'invention propose une barquette résultant de la mise en oeuvre du procédé ci-dessus. Une telle barquette est alors caractérisée par la combinaison des caractéristiques suivantes :
- un conteneur creux en carton, délimitant au moins une cavité entre une paroi de fond de conteneur et une paroi périphérique latérale de conteneur, avec une ouverture principale selon un plan d'ouverture de la cavité vers le haut,
- un film d'étanchéité en matière plastique, solidarisé à la face intérieure du conteneur en carton,
- le film d'étanchéité étant en polyéthylène ou en polyéthylène téréphtalate,
- la face intérieure du conteneur en carton comprenant une couche plastifiée sur laquelle est soudé le film d'étanchéité,
- le film d'étanchéité adhérant à la face intérieure plastifiée du conteneur en carton selon une force d'adhésion comprise entre 2,5 N/10mm et 8 N/10mm.

D'autres objets, caractéristiques et avantages de la présente invention ressortiront de la description suivante de modes de réalisation particuliers, faite en relation avec les figures jointes, parmi lesquelles :
- la figure 1 est une vue générale en perspective d'une barquette selon un mode de réalisation de l'invention ;
- la figure 2 est une vue de dessus de la barquette de la figure 1 ;
- la figure 3 est une vue de face de la barquette de la figure 1 ;
- la figure 4 est une vue de côté de la barquette de la figure 1 ;
- la figure 5 est une vue de dessus d'une plaque de carton destinée à former le conteneur creux en carton assurant le renforcement de la barquette de la figure 1 ;
- la figure 6 est une vue en perspective du conteneur creux en carton, après formage ;
- la figure 7 est une vue schématique de face d'une machine de fabrication de barquette selon un mode de réalisation de l'invention ; et
- la figure 8 est une vue schématique de dessus de la machine de la figure 7, selon une variante avantageuse.

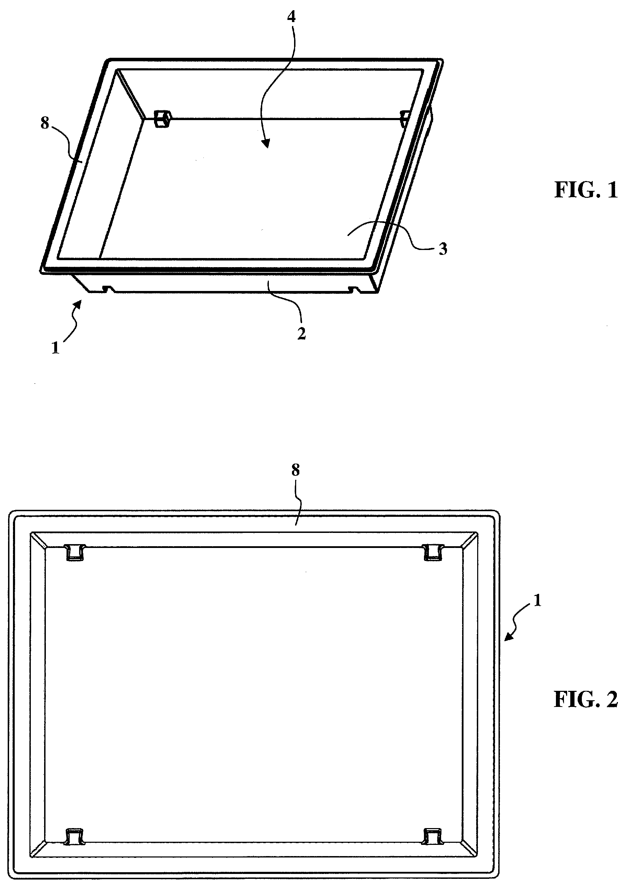

On considère tout d'abord les figures 1 à 4, qui illustrent une structure de barquette 1 selon un mode de réalisation de la présente invention.

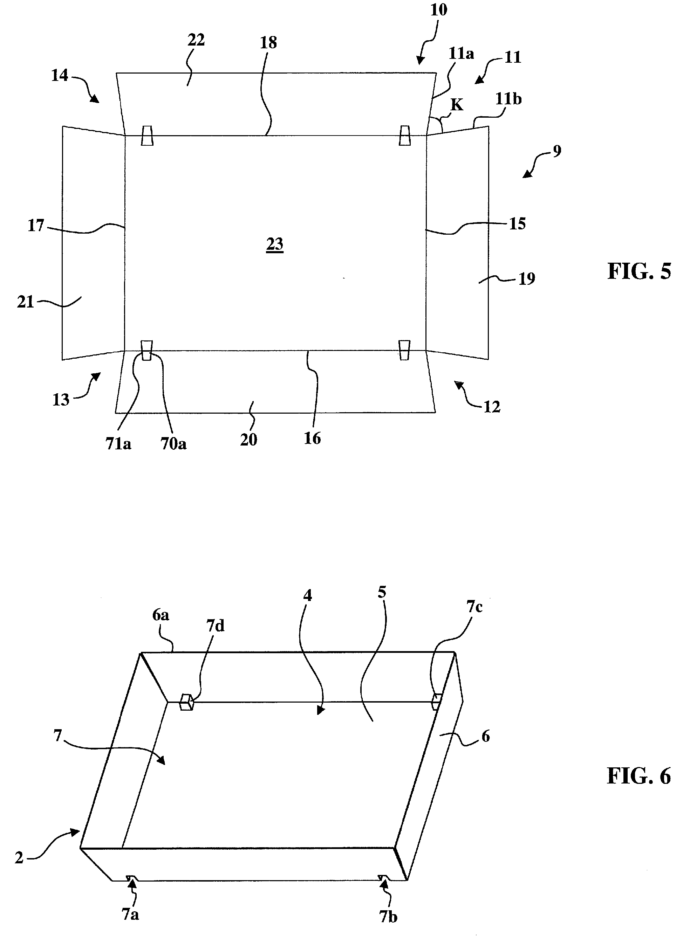

Cette barquette 1 se compose de l'assemblage d'un conteneur en carton 2 et d'un film d'étanchéité 3 en matière plastique. Le conteneur en carton 2, illustré isolément sur la figure 6, délimite au moins une cavité 4 entre une paroi de fond de conteneur 5 et une paroi périphérique latérale de conteneur 6, avec une ouverture principale 7 selon un plan d'ouverture P de la cavité 4 vers le haut.

Dans le mode de réalisation illustré, le conteneur en carton 2 présente une forme générale parallélépipédique, la paroi de fond 5 formant une grande face rectangulaire, la paroi périphérique 6 étant composée de quatre segments rectangulaires, l'ensemble entourant une cavité 4 unique. On comprendra toutefois qu'il est possible, sans sortir du cadre de la présente invention, de concevoir des conteneurs creux en carton ayant des formes différentes, par exemple une forme cylindrique à contour circulaire ou ovale, une forme à contour polygonal, une forme à parois intermédiaires de séparation définissant une pluralité de cavités adjacentes.

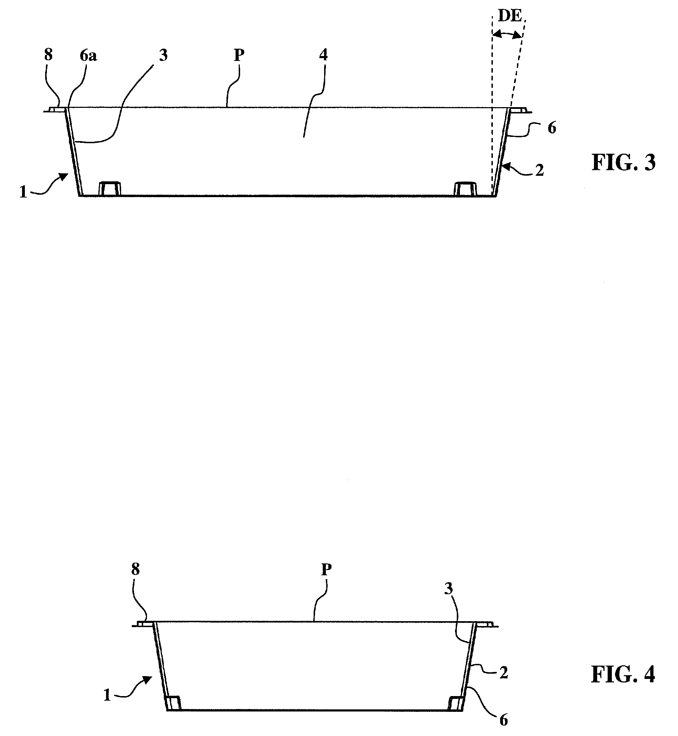

Comme on le voit plus distinctement sur les figures 3 et 4, la paroi périphérique latérale de conteneur 6 est inclinée vers l'extérieur, présentant un angle de dépouille DE non nul, par exemple de 5 à 10°.

Comme on le voit plus particulièrement sur la figure 6, des butées d'empilage 7a, 7b, 7c, 7d sont réalisées par des découpes appropriées entre la paroi de fond 5 et la paroi périphérique latérale 6 du conteneur en carton 2. Ces butées d'empilage découpées sont utiles pour éviter l'encastrement complet des barquettes empilées les unes dans les autres. Elles peuvent également être utiles lors du procédé de fabrication de la barquette, comme cela sera expliqué ultérieurement.

Dans la barquette 1 telle qu'illustrée sur les figures 1 à 4, le conteneur en carton constitue une structure extérieure conférant à la barquette 1 sa résistance mécanique. La face intérieure de la cavité 4 du conteneur en carton 2 est recouverte par le film d'étanchéité 3 en matière plastique, qui en assure l'étanchéité et l'intégrité.

Le bord supérieur 6a de la paroi périphérique latérale de conteneur 6, dans ce mode de réalisation, se situe dans le plan d'ouverture P. Le film d'étanchéité 3 en matière plastique forme également un trottoir périphérique supérieur 8 qui s'étend radialement vers l'extérieur dans le plan d'ouverture P depuis le bord supérieur 6a du conteneur en carton 2.

Comme on le comprend des figures 5 et 6, le conteneur en carton 2 est formé à partir d'une plaque de carton 9 découpée et rainée. De façon plus spécifique, dans le mode de réalisation illustré sur la figure 5, la plaque de carton 9 est plane, à contour 10 rectangulaire, avec des encoches 11, 12, 13 et 14 à chaque coin, les bords de chaque encoche tels que les bords 11a et 11b de l'encoche 11 formant un angle K aigu.

Des lignes de pliure 15, 16, 17 et 18 rectilignes relient les sommets des encoches consécutives 11, 12, 13 et 14. Chaque ligne de pliure 15-18 est réalisée soit par écrasement du carton, soit par lignes de coupe intermittentes, pour constituer une amorce de pliage. Ainsi, les lignes de pliure 15-18 et les encoches 11-14 définissent des volets rabattables 19, 20, 21 et 22 rattachés par les lignes de pliure 15-18 à une partie centrale rectangulaire 23.

Par pliage selon les lignes de pliure 15-18, les volets rabattables 19-22 sont destinés à former la paroi périphérique 6 du conteneur en carton 2 de la figure 6, tandis que la partie centrale rectangulaire 23 est destinée à former la paroi de fond 5 du conteneur en carton 2.

Comme illustré sur la figure 5, des lignes de coupe transversales 70a et 71a, chevauchant une ligne de pliure 16, permettent de réaliser, après pliage, la butée d'empilage 7a illustrée sur la figure 6. On réalise de la même manière les butée d'empilage 7b, 7c et 7d.

Pour éviter un encastrement, les butées d'empilage d'une barquette sont décalées latéralement par rapport aux butées d'empilage des barquettes adjacentes dans une pile de barquettes. On empile pour cela des barquettes non identiques, ou on pivote des barquettes adjacentes à butées d'empilage ayant des positions non symétriques.

Dans le mode de réalisation préféré illustré sur les figures 1 à 6, le trottoir périphérique 8 est réalisé par le seul film d'étanchéité 3 en matière plastique. L'avantage est que le film d'étanchéité 3 en matière plastique peut être conformé de façon plane, sans risque de déformation ultérieure, permettant le scellement ultérieur fiable d'un opercule obturant l'ouverture supérieure de la barquette 1.

Toutefois, sans sortir du cadre de la présente invention, on peut concevoir un trottoir périphérique 8 constitué de l'assemblage de volets rabattables du conteneur en carton 2 et d'une couche supérieure constituée par le film d'étanchéité 3 en matière plastique. Dans ce cas, la plaque de carton 9 illustrée sur la figure 5 doit comporter en outre des volets secondaires extérieurs, se rattachant aux volets 19-22, pour constituer le trottoir périphérique 8. Un inconvénient de ce mode de réalisation peut être que le carton risque de déformer le trottoir périphérique 8, dégradant sa planéité et pouvant réduire la fiabilité du scellement d'un opercule.

Afin de disposer d'un produit facilement recyclable, le conteneur en carton 2, et donc la plaque de carton 9 qui permet de le réaliser, est constitué essentiellement en carton (par exemple recyclé). D'excellents résultats ont été obtenus à l'aide d'un carton présentant un grammage compris entre environ 170 g par mètre carré et 300 g par mètre carré.

La plaque de carton 9 comporte en outre une face principale plastifiée, par exemple la face supérieure illustrée sur la figure 5.

Selon la présente invention, la face principale plastifiée est réalisée par contrecollage d'un film mince de matière plastique.

L'utilisation d'un tel carton à face plastifiée par contrecollage procure des résultats satisfaisants, alors qu'un carton à face plastifiée par enduction tel que ceux utilisés dans les documents d'art antérieur précédemment cités ne donnent pas satisfaction. L'effet technique obtenu par la présente invention est à la fois une bonne adhérence du film d'étanchéité 3 sur le carton, et une bonne réversibilité de cette adhérence pour permettre la séparation ultérieure du film d'étanchéité 3 vis-à-vis du carton.

L'effet technique obtenu grâce à la présente invention, par utilisation de carton à face plastifiée par contrecollage, est démontré par les résultats de tests suivants :
on a qualifié l'adhérence d'une feuille de polyéthylène recyclé sur un carton à face plastifiée selon différentes techniques de plastification, le carton ayant un grammage de 250 g par mètre carré ;
un premier carton a été plastifié par enduction d'une couche de polyéthylène ;
un second carton a été plastifié par contrecollage d'un film mince de polyéthylène ;
un troisième carton a été plastifié par contrecollage d'un film mince de polyéthylène téréphtalate ;
une feuille de polyéthylène recyclé a été scellée à chaud et sous pression sur la face plastifiée de chacun des cartons, au moyen d'une scelleuse à bande dont la largeur de scellage est de 10 mm, avec les conditions de scellage suivantes : température 110 °C ; temps de scellage 1 seconde ; pression de scellage 5 bars ; la mesure de l'adhérence a été faite sur banc de traction, en mesurant la force nécessaire à la séparation de la feuille de polyéthylène recyclé, c'est-à-dire la force en Newton pour 10 mm de bande de scellage, les conditions de traction étant : une vitesse de 50 mm/mn, une course de 100 mm ; chaque essai a été réalisé sur 10 échantillons ;
les résultats obtenus pour la mesure de l'adhérence étaient :
   - avec le premier carton plastifié par enduction : 1,2 N/10mm,
   - avec le second carton plastifié par contrecollage de polyéthylëne : 2,8 N/10mm,
   - avec le troisième carton plastifié par contrecollage de polyéthylène téréphtalate : 6,6 N/10mm.

On constate que l'usage du carton plastifié par contrecollage de polyéthylène téréphtalate permet d'atteindre une valeur d'adhésion élevée tout en étant facilement séparable en fin de vie.

On note une diminution significative de la force d'adhésion avec l'utilisation d'une couche de polyéthylène contrecollée, l'adhésion restant toutefois satisfaisante.

Et on constate la mauvaise qualité d'adhésion lors de l'utilisation d'un carton plastifié par la technologie d'enduction de polyéthylène.

On considère qu'un bon compromis entre une adhésion suffisante et une capacité de séparation satisfaisante est atteint lorsque la force d'adhésion est comprise entre 2,5 N/10mm et 8 N/10mm, de préférence comprise entre 4 N/10mm et 8 N/10mm.

La couche de matière plastique constituant la face plastifiée présente une faible épaisseur, inférieure à 30 microns, avantageusement comprise entre 10 et 20 microns. De la sorte, la plaque de carton 9, constituée essentiellement de carton avec seulement une très faible quantité de matière plastique formant la face plastifiée, est considérée elle-même comme du carton en ce qui concerne les normes applicables au recyclage ultérieur des matières. La quantité de colle utilisée pour contrecoller le film mince de matière plastique est extrêmement faible, totalement négligeable en ce qui concerne le recyclage ultérieur.

La matière plastique constituant la face plastifiée de la plaque en carton 9 peut avantageusement être du polyéthylène, ou du polyéthylène téréphtalate.

Le film d'étanchéité 3 en matière plastique, formant l'intérieur de la barquette 1, est avantageusement un film multicouche avec une couche en polyéthylène, ou un film en polyéthylène téréphtalate.

D'excellents résultats ont été obtenus en partant d'une feuille en polyéthylène téréphtalate amorphe ayant une épaisseur initiale de 0,2 millimètres. Du polyéthylène, ou du rPET (polyéthylène téréphtalate recyclé), peut également être utilisé pour diminuer encore l'impact environnemental de la barquette.

Dans la barquette 1 ainsi assemblée, le film d'étanchéité 3 en matière plastique se trouve solidarisé au conteneur en carton 2 selon toute sa surface de contact. En réalité, le film d'étanchéité 3 en matière plastique adhère par soudure à la couche de matière plastique constituant la face plastifiée intérieure du conteneur en carton 2, et cette adhésion est fiable pour assurer l'intégrité de la barquette 1 pendant toute son utilisation normale, et pour maintenir en forme le conteneur en carton 2. Il est ainsi inutile d'utiliser des moyens supplémentaires pour maintenir en forme le conteneur en carton 2.

Cependant, pour permettre un recyclage ultérieur correct, le film d'étanchéité 3 en matière plastique reste séparable du conteneur en carton 2, par arrachement mécanique volontaire. L'expérience montre que, selon l'invention, l'arrachement est possible sans provoquer l'adhérence de parties de carton du conteneur en carton 2 à la matière plastique constituant le film d'étanchéité 3 en matière plastique.

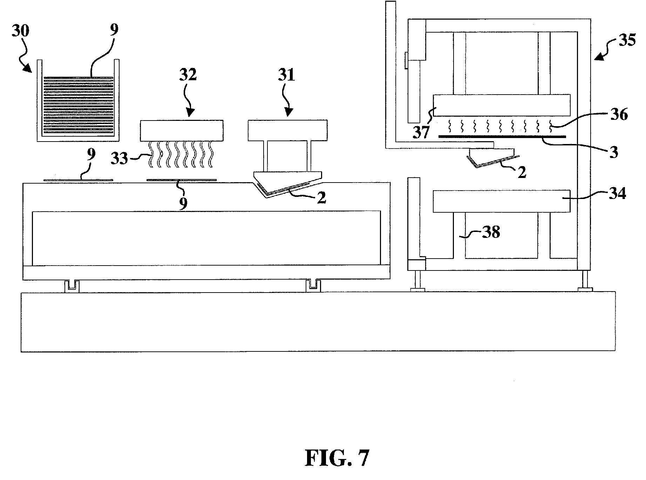

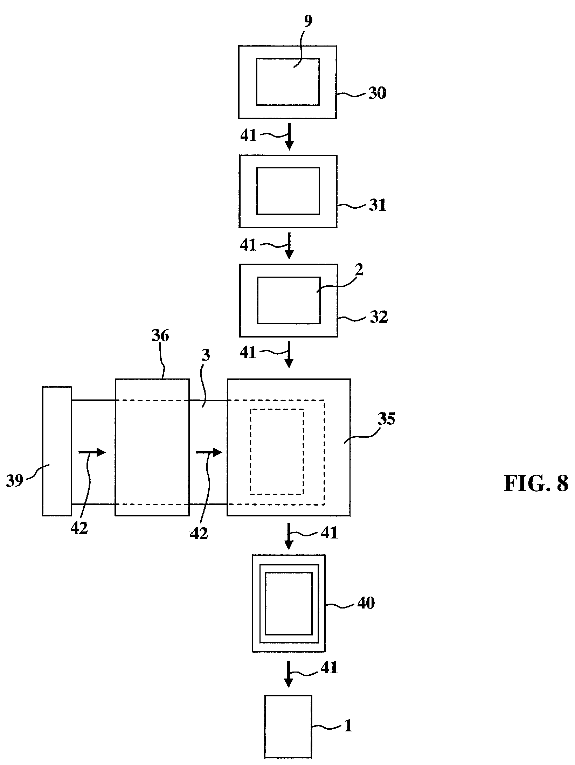

Ces effets techniques avantageux de la barquette 1 selon l'invention sont obtenus grâce au procédé de fabrication qui va maintenant être décrit en relation avec les figures 7 et 8.

Au cours d'une étape A), on prélève ou on réalise un conteneur en carton 2 à face intérieure plastifiée, tel qu'illustré sur la figure 6. Cette étape peut être réalisée par simple prélèvement du conteneur préformé, à partir d'une réserve de conteneurs. De préférence, cette étape peut être réalisée comme illustré sur la figure 7, selon une séquence A1 de prélèvement d'une plaque de carton 9 prédécoupée et rainée telle qu'illustrée sur la figure 5, à partir d'une réserve de plaques de carton 30 telle qu'illustrée sur la figure 7, réserve dans laquelle des plaques de carton 9 à face plastifiée sont empilées. Lors d'une séquence A2, la plaque de carton 9 prélevée est ensuite préformée par pliage dans un poste de préformage 31 pour constituer le conteneur en carton 2.

Au cours d'une étape B), dans un poste de préchauffage 32 placé en amont du poste de préformage 31, la plaque de carton 9 à face plastifiée est préchauffée par rayonnement sur sa face plastifiée par des moyens de préchauffage 33, pour amener la face plastifiée à une température de préchauffage T1 d'environ 100°C.

En alternative, le poste de préchauffage 32 peut être placé en aval du poste de préformage 31, pour agir non pas sur la plaque de carton 9 avant son préformage, mais sur le conteneur en carton 2 après son préformage. Cette alternative est favorable à la conservation d'une température élevée de la face plastifiée du carton avant l'étape ultérieure de thermoformage.

Au cours d'une étape C), dans laquelle le conteneur en carton 2 est placé dans un moule de thermoformage 34 dans un poste de thermoformage 35, on amène un film d'étanchéité 3 en matière plastique au regard de l'ouverture principale du conteneur en carton 2, étant observé que le conteneur en carton 2 se refroidit progressivement depuis son préchauffage dans le poste de préchauffage 32 mais conserve encore une température suffisamment élevée.

Au cours d'une étape D), on chauffe par rayonnement 36 le film d'étanchéité 3 en matière plastique jusqu'à une température permettant sa déformation plastique.

Au cours d'une étape E), on déforme le film d'étanchéité 3 en matière plastique, pendant ou après son échauffement, pour le plaquer sous pression contre la face plastifiée intérieure du conteneur en carton 2 encore chaude.

On considère que la face plastifiée intérieure du conteneur en carton 2 est « encore chaude » lorsque sa température est encore à une température d'adhésion T2 supérieure à 50°C, avantageusement comprise entre 60°C et 80°C. De la sorte, on réalise une bonne adhésion entre la matière plastique de la face plastifiée du conteneur en carton 2 et la matière plastique du film d'étanchéité 3 en matière plastique.

Au cours de l'étape E), on aide la pénétration du film d'étanchéité 3 en matière plastique dans le conteneur en carton 2 à l'aide de moyens de poussée qui peuvent avantageusement comprendre des moyens d'injection de gaz sous pression 37 sur la face extérieure du film de matière plastique 3, et/ou des moyens d'aspiration de gaz 38 dans l'interface entre le moule de thermoformage 34 et le conteneur en carton 2. De tels moyens sont couramment utilisés dans les techniques de thermoformage, et pour cette raison ils ne sont pas décrits de manière détaillée.

En pratique, la dépression produite par les moyens d'aspiration de gaz 38 se propage à l'interface entre le conteneur en carton 2 et le film d'étanchéité 3 en matière plastique en traversant soit les butées d'empilage découpées 7a-7d précédemment décrites, soit les lignes de coupe intermittentes réalisant les lignes de pliure 15-18.

Avantageusement, les moyens de poussée produisent une surpression d'air de 400 000 à 600 000 Pa sur la face extérieure du film d'étanchéité en matière plastique 3, et une dépression de 50 000 à 80 000 Pa dans l'interface entre le conteneur en carton 2 et le film d'étanchéité 3 en matière plastique.

Après une durée de refroidissement appropriée, telle que celles généralement utilisées dans les procédés de thermoformage, et après découpage du pourtour pour éliminer l'excès de film de matière plastique, on évacue la barquette 1 ainsi constituée. On notera que les durées de refroidissement généralement utilisées dans les procédés de thermoformage sont satisfaisantes pour assurer simultanément la rigidification du film d'étanchéité 3 en matière plastique et son adhésion fiable au conteneur en carton 2.

En considérant la figure 8, on distingue les principaux postes de travail de la machine de fabrication de barquettes.

On retrouve, disposés en ligne, la réserve 30 de plaques de carton 9, le poste de préformage 31, le poste de préchauffage 32, le poste de thermoformage 35, lui-même suivi d'un poste de découpage 40 destiné à découper le surplus périphérique de film d'étanchéité 3 en matière plastique après le thermoformage.

Disposés selon une ligne perpendiculaire rejoignant la ligne précédente dans le poste de thermoformage 35, on distingue un dispositif de rayonnement 36 pour l'échauffement du film d'étanchéité 3 en matière plastique, et un poste d'alimentation 39 en film d'étanchéité 3 en matière plastique.

On remarquera, dans le mode de réalisation illustré sur la figure 8, que le poste de préformage 31 est disposé en amont du poste de préchauffage 32 dans le sens de déplacement du carton illustré par les flèches 41. Le déplacement du film d'étanchéité 3 en matière plastique, illustré par les flèches 42, s'effectue perpendiculairement au déplacement 41 du carton.

Dans la réalisation illustrée sur les figures 7 et 8, le moule de thermoformage 34 reste à demeure dans le poste de thermoformage 35, et on utilise un moule de préformage distinct dans le poste de préformage 31. Une difficulté est qu'il faut réserver une dimension d'accès suffisante pour l'introduction du conteneur en carton 2 dans le poste de thermoformage 35.

Une solution alternative peut consister à prévoir un moule de thermoformage 34 lui-même déplaçable entre le poste de thermoformage 35 et le poste de préformage 31. Le moule de thermoformage 34 sert alors à la fois pour le préformage et pour le thermoformage, et l'accès au moule pour l'introduction du conteneur en carton 2 est facilité dans le poste de préformage 31.

Avantageusement, le film d'étanchéité en matière plastique 3 est initialement sous forme d'une bande continue, de largeur supérieure à la dimension de face principale du conteneur en carton 2, de façon à constituer le trottoir périphérique 8 (figures 1 à 4).

Des moyens de convoyage successifs, par exemple constitués de structures connues en soi telles que des tapis roulants ou des robots, sont interposés entre les postes successifs 30, 31, 32, 35 et 40, pour déplacer la plaque de carton 9, puis le conteneur en carton 2, puis l'ébauche de barquette en sortie du poste de thermoformage 35, puis la barquette 1 en sortie du poste de découpage 40.

Dans la réalisation illustrée sur les figures, la machine de fabrication de barquettes réalise le préchauffage de la plaque de carton 9 ou du conteneur en carton 2 avant l'introduction dans le poste de thermoformage 35.

En alternative, il est possible de concevoir, sans sortir du cadre de la présente invention, une machine de fabrication de barquettes dans laquelle le préchauffage du carton s'effectue dans le poste de thermoformage 35 lui-même, préalablement à l'étape de thermoformage.

De même, l'étape d'échauffement préalable du film d'étanchéité en matière plastique 3 par les moyens de rayonnement 36 peut être effectuée soit en dehors du poste de thermoformage 35 comme illustré sur la figure 8, soit à l'intérieur même du poste de thermoformage 35, avant ou pendant le thermoformage.

La présente invention n'est pas limitée aux modes de réalisation qui ont été explicitement décrits, mais elle en inclut les diverses variantes et généralisations contenues dans le domaine des revendications ci-après.

## Revendications

1. - Procédé de fabrication d'une barquette (1) destinée à contenir des aliments, comportant les étapes suivantes :
A) fournir un conteneur creux en carton (2), délimitant au moins une cavité (4) entre une paroi de fond de conteneur (5) et une paroi périphérique latérale de conteneur (6), avec une ouverture principale (7) selon un plan d'ouverture (P) de la cavité (4) vers le haut,
C) fournir un film d'étanchéité (3) en matière plastique au regard de l'ouverture principale (7) du conteneur en carton (2),
E) déformer ledit film d'étanchéité (3) en le plaquant à chaud et sous pression contre la face intérieure du conteneur en carton (2),
**caractérisé en ce que** :
- pendant l'étape A), on utilise un carton (2) à face plastifiée,
- pendant l'étape A), la face plastifiée du carton est orientée vers l'intérieur du conteneur (2),
- avant l'étape E), on prévoit une étape : B) préchauffer la face plastifiée du carton jusqu'à une température de préchauffage (T1),
- pendant l'étape E), ledit film d'étanchéité (3) est à une température permettant sa déformation plastique, et la face intérieure du conteneur en carton (2) est encore chaude.

2. - Procédé de fabrication selon la revendication 1, **caractérisé en ce que**, avant l'étape E), on prévoit une étape D) : chauffer ledit film d'étanchéité (3) à une température permettant sa déformation plastique.

3. - Procédé de fabrication selon l'une des revendications 1 ou 2, **caractérisé en ce que**, à l'issue de l'étape B), la face plastifiée du conteneur en carton (2) est à une température de préchauffage (T1) d'environ 100°C.

4. - Procédé de fabrication selon l'une quelconque des revendications 1 à 3, **caractérisé en ce que**, au début de l'étape E), la face plastifiée du conteneur en carton (2) est encore à une température d'adhésion (T2) supérieure à 50°C, avantageusement comprise entre 60°C et 80°C.

5. - Procédé de fabrication selon l'une quelconque des revendications 1 à 4, **caractérisé en ce que** :
- avant l'étape E), le conteneur en carton (2) est engagé dans un moule de thermoformage (34), et
- lors de l'étape E), on aide la pénétration du film d'étanchéité (3) dans ladite au moins une cavité (4) du conteneur en carton (2) à l'aide de moyens de poussée (37, 38).

6. - Procédé de fabrication selon la revendication 5, **caractérisé en ce que** les moyens de poussée (37, 38) comprennent des moyens d'injection de gaz sous pression (37) sur la face extérieure du film d'étanchéité (3), et/ou des moyens d'aspiration de gaz (38) dans l'interface entre le moule de thermoformage (34) et le conteneur en carton (2).

7. - Procédé de fabrication selon l'une des revendications 5 ou 6, **caractérisé en ce que** les moyens de poussée (37, 38) produisent une surpression d'air de 400 000 à 600 000 Pa sur la face extérieure du film d'étanchéité (3), et une dépression d'air de 50 000 à 80 000 Pa dans l'interface entre le conteneur en carton (2) et le film d'étanchéité (3).

8. - Procédé de fabrication selon l'une quelconque des revendications 1 à 7, **caractérisé en ce que** l'étape A) comprend les séquences :
A1) fournir une plaque de carton (9) découpée, rainée, et à face plastifiée,
A2) avant ou après l'étape B) de préchauffage de la face plastifiée du carton, préformer la plaque de carton (9) par pliage pour constituer ledit conteneur creux en carton (2) délimitant au moins une cavité (4) entre une paroi de fond de conteneur (5) et une paroi périphérique latérale de conteneur (6), avec une ouverture principale (7) selon un plan d'ouverture (P) de la cavité (4) vers le haut, la face plastifiée du carton étant orientée vers l'intérieur du conteneur (2).

9. - Procédé de fabrication selon l'une quelconque des revendications 1 à 8, **caractérisé en ce que** la face plastifiée du carton est en polyéthylène mono (PE), ou de préférence en polyéthylène téréphtalate (PET).

10. - Procédé de fabrication selon l'une quelconque des revendications 1 à 9, **caractérisé en ce que** l'épaisseur de la couche de matière plastique formant la face plastifiée du carton est inférieure à 30 microns.

11. - Procédé de fabrication selon l'une quelconque des revendications 1 à 10, **caractérisé en ce que** le film d'étanchéité (3) est un film multicouche avec une couche en polyéthylène (PE), ou un film en polyéthylène téréphtalate (PET).

12. - Procédé de fabrication selon l'une quelconque des revendications 1 à 11, **caractérisé en ce que** la face plastifiée du carton est en même matière que le film d'étanchéité (3).

13. - Machine de fabrication d'une barquette (1), **caractérisée en ce qu'**elle met en oeuvre un procédé de fabrication selon l'une quelconque des revendications 1 à 12, et **en ce qu'**elle comprend :
- des moyens de convoyage pour amener un à un des conteneurs creux en carton (2) à un poste de thermoformage (35),
- des moyens de préchauffage (33), pour préchauffer au moins une face de conteneur (2) avant le thermoformage, dans un poste de préchauffage 32,
- un poste de thermoformage (35), avec des moyens pour amener dans un moule de thermoformage (34) un conteneur en carton (2) provenant des moyens de convoyage, avec des moyens pour amener un film d'étanchéité (3) face à l'ouverture du moule de thermoformage, des moyens (36) pour chauffer le film d'étanchéité (3), et des moyens (37, 38) pour presser sélectivement le film d'étanchéité (3) dans le creux du conteneur en carton (2) préalablement préchauffé alors que le conteneur (2) préchauffé est encore chaud.

14. - Machine de fabrication selon la revendication 13, **caractérisée en ce qu'**elle comprend en outre :
- des moyens de stockage (30) d'une pile de plaques de carton (9) prédécoupées et rainées selon des lignes de pliure (15-18) souhaitées,
- des moyens de préformage (31) pour préformer les plaques de carton (9) et constituer ainsi les conteneurs creux en carton (2).

15. - Machine de fabrication selon l'une des revendications 13 ou 14, **caractérisée en ce que** les moyens de préchauffage (33) sont aptes à préchauffer une face du carton à une température de préchauffage (T1) d'environ 100°C.

16. - Barquette (1) destinée à contenir des aliments, comportant :
- un conteneur creux en carton (2), délimitant au moins une cavité (4) entre une paroi de fond de conteneur (5) et une paroi périphérique latérale de conteneur (6), avec une ouverture principale (7) selon un plan d'ouverture (P) de la cavité (4) vers le haut,
- un film d'étanchéité (3) en matière plastique, solidarisé à la face intérieure du conteneur en carton (2),
**caractérisée en ce que** :
- le film d'étanchéité (3) est en polyéthylène ou en polyéthylène téréphtalate,
- la face intérieure du conteneur en carton (2) comprend une couche plastifiée sur laquelle est soudé le film d'étanchéité (3),
- le film d'étanchéité (3) adhère à la face intérieure plastifiée du conteneur en carton (2) selon une force d'adhésion comprise entre 2,5 N/10mm et 8 N/10mm.
